# EUROPEAN PATENT APPLICATION

(11) **EP 4 814 058 A1**
(43) Date of publication of application: **30.09.2026**
(21) Application number: 24893935.7
(22) Date of filing: 25.10.2024
(51) Int. Cl.: C08L 83/08, C08K 3/013

(54) **MOLDED PRODUCT CONTAINING INORGANIC PARTICLES AND WATER SOLUBLE POLYSILOXANE COMPOUND HAVING AMINO GROUP, METHOD FOR PRODUCING SAME, AND INORGANIC PARTICLE DISPERSION LIQUID**

(30) Priority: 22.11.2023 JP 2023198111
(71) Applicant: SHIN-ETSU CHEMICAL CO., LTD., Tokyo 100-0005 (JP)
(72) Inventor: NAKAZAWA, Koichi, Joetsu-shi, Niigata 942-8601 (JP); HONMA, Takayuki, Tokyo 100-0005 (JP); KIYOMORI, Ayumu, Joetsu-shi, Niigata 942-8601 (JP)
(74) Representative: Mewburn Ellis LLP
(86) International application number: PCT/JP2024/038086
(87) International publication number: WO 2025/109942

(57) **Abstract**

This molded product (not comprising an organic titanate or an organic zirconate) comprising inorganic particles and a water soluble polysiloxane compound which has an amino group and which is represented by formula (1) makes it possible to reducing a storage volume and can be redispersed in a dispersion medium to be used in the form of a dispersion liquid. 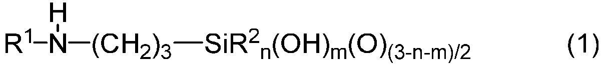 [R¹ represents a hydrogen atom, a C1-20 substituted or unsubstituted monovalent hydrocarbon group, or a monovalent hydrocarbon group which has a carboxy group represented by general formula (2) below 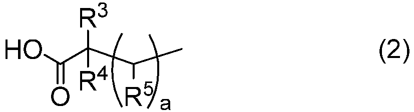 (where R³, R⁴, and R⁵ each independently represent a hydrogen atom or a C1-20 substituted or unsubstituted monovalent hydrocarbon group, and a represents 0 or 1),
R² represents a C1-20 substituted or unsubstituted monovalent hydrocarbon group,
m is 0 or a positive number less than 3, n is 0 or 1, and n+m is 0 or a positive number less than 3.]

## Description

### TECHNICAL FIELD

The present invention relates to a molded product containing inorganic particles and a water-soluble polysiloxane compound containing an amino group, a method for producing the same, and an inorganic particle dispersion liquid.

### BACKGROUND ART

Inorganic particles are used in a variety of applications, such as pigments, ultraviolet shielding materials, thermally conductive fillers, filling materials, photocatalysts, ceramic raw materials, and electronic devices, and are used by being blended into cosmetics, coating materials, resin compositions, and the like. In this case, the surface of inorganic particles is treated with other inorganic compounds or organic compounds depending on the applications to improve the performance, the functions, and the like of the inorganic particles.

For example, Patent Document 1 suggests a solid composition intended to prepare an anticorrosion coating composition obtained by dehydrating an aqueous composition based on particulate metals or a mixture of particulate metals, an organic titanate and/or an organic zirconate, and a silane containing at least one hydrolyzable functional group in addition to a hydroxyl functional group. Further, Patent Document 1 discloses that when this solid composition is rehydrated, the solid composition has the same composition as the aqueous composition before the dehydration.

### PRIOR ART DOCUMENT

### PATENT DOCUMENT

Patent Document 1: JP-A 2021-504557

### SUMMARY OF INVENTION

### TECHNICAL PROBLEM

The technique of Patent Document 1 enables reduction of the storage capacity, but the solid composition based solely on a silicon precursor cannot be rehydrated. Therefore, the solid composition is required to contain an organic titanate and/or an organic zirconate.

The present invention has been made in consideration of the above-described circumstances, and an object thereof is to provide a molded product containing inorganic particles and a water-soluble polysiloxane compound containing an amino group, which can reduce the storage capacity and can be used as a dispersion liquid by being redispersed in a dispersion medium, a method for producing the same, and an inorganic particle dispersion liquid.

### SOLUTION TO PROBLEM

As a result of intensive examination repeatedly conducted by the present inventors in order to achieve the above-described object, it is found that since a molded product containing inorganic particles and a water-soluble polysiloxane compound containing an amino group can further reduce the storage capacity compared to a dispersion liquid containing such a water-soluble polysiloxane compound and inorganic particles, the storage cost and the transportation cost can be reduced, the molded product can be used as an inorganic particle dispersion liquid by being redispersed in a dispersion medium during use, and the obtained inorganic particle dispersion liquid can maintain the dispersed state for a long period of time, thereby completing the present invention.

That is, the present invention provides the following aspects.
1. A molded product including: a water-soluble polysiloxane compound containing an amino group represented by general formula (1); and inorganic particles, in which the molded product does not contain an organic titanate or an organic zirconate, 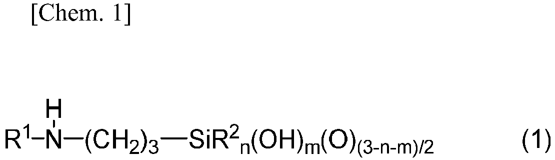
   in formula (1), R¹ represents a hydrogen atom, a substituted or unsubstituted monovalent hydrocarbon group having 1 to 20 carbon atoms, or a monovalent hydrocarbon group containing a carboxy group represented by general formula (2), 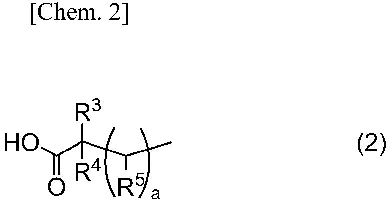
   in formula (2), R³, R⁴, and R⁵ each independently represent a hydrogen atom or a substituted or unsubstituted monovalent hydrocarbon group having 1 to 20 carbon atoms, and a represents 0 or 1,
   R² represents a substituted or unsubstituted monovalent hydrocarbon group having 1 to 20 carbon atoms,
   m represents 0 or a positive number less than 3, n represents 0 or 1, and n + m is 0 or a positive number less than 3.
2. The molded product according to 1, in which the inorganic particles are inorganic oxide particles.
3. The molded product according to 2, in which the inorganic oxide particles are selected from the group consisting of titanium oxide, silicon oxide, zinc oxide, zirconium oxide, aluminum oxide, and zeolite.
4. The molded product according to 1 or 2, in which an amount of the water-soluble polysiloxane compound containing an amino group to be blended is 0.1 to 1000 parts by weight with respect to 100 parts by weight of the inorganic particles.
5. An inorganic particle dispersion liquid including: a mixture of the molded product according to 1 and a dispersion medium, in which the inorganic particles are dispersed in the dispersion medium.
6. A method for producing an inorganic particle dispersion liquid, including: mixing the molded product according to 1 with a dispersion medium.
7. A method for producing the molded product according to 1, including: mixing a solution that contains the water-soluble polysiloxane compound containing an amino group with the inorganic particles; and molding the obtained mixture.

### ADVANTAGEOUS EFFECTS OF INVENTION

The molded product of the present invention can further reduce the storage capacity compared to a dispersion liquid containing inorganic particles and a water-soluble polysiloxane compound containing an amino group, and thus can reduce the storage cost and the transportation cost.

Further, the molded product of the present invention can be used as an inorganic particle dispersion liquid by being redispersed in a dispersion medium during use.

Further, the obtained inorganic particle dispersion liquid that contains a water-soluble polysiloxane compound containing an amino group can maintain the dispersed state for a long period of time.

### DESCRIPTION OF EMBODIMENTS

Hereinafter, the present invention will be described in detail.

A molded product of the present invention contains a water-soluble polysiloxane compound containing an amino group represented by general formula (1) (hereinafter, referred to as "compound (1)"), and inorganic particles.

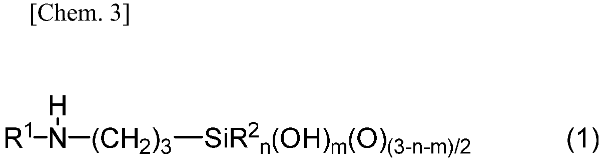

In general formula (1), R¹ represents a hydrogen atom, a substituted or unsubstituted monovalent hydrocarbon group having 1 to 20 carbon atoms, preferably 1 to 10 carbon atoms, and more preferably 1 to 5 carbon atoms, or a monovalent hydrocarbon group containing a carboxy group represented by general formula (2).

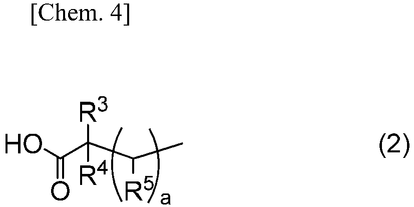

Examples of the monovalent hydrocarbon group as R¹ include a linear, branched, or cyclic alkyl group, an alkenyl group, an aryl group, and an aralkyl group.

Specific examples thereof include a linear alkyl group such as a methyl group, an ethyl group, an n-propyl group, an n-butyl group, a pentyl group, a hexyl group, a heptyl group, an octyl group, a decyl group, a dodecyl group, a tetradecyl group, a hexadecyl group, or an octadecyl group, a branched alkyl group such as an isopropyl group, an isobutyl group, a sec-butyl group, a tert-butyl group, or a 2-ethylhexyl group, a cyclic alkyl group such as a cyclopentyl group or a cyclohexyl group, an alkenyl group such as a vinyl group, a 1-propenyl group, or a 2-propenyl(allyl) group, an aryl group such as a phenyl group, a tolyl group, or a naphthyl group, and an aralkyl group such as a phenylmethyl group or a 2-phenylethyl group.

Among these, R¹ represents preferably a hydrogen atom, a substituted or unsubstituted linear, branched, or cyclic alkyl group having 1 to 5 carbon atoms, or an alkenyl group, more preferably a hydrogen atom, an unsubstituted linear or branched alkyl group having 1 to 3 carbon atoms, or an alkenyl group particularly from the viewpoint of availability of raw materials, and still more preferably a hydrogen atom, a methyl group, an ethyl group, an n-propyl group, or an isopropyl group.

In addition, some or all hydrogen atoms of each of the hydrocarbon groups may be substituted with other substituents, and specific examples of the substituents include an alkoxy group having 1 to 6 carbon atoms such as a methoxy group, an ethoxy group, an (iso)propoxy group, or a phenoxy group, a halogen atom such as a fluorine atom, a chlorine atom, a bromine atom, or an iodine atom, a cyano group, an amino group, an acyl group, an alkoxycarbonyl group having 1 to 5 carbon atoms, a carboxy group, an alkylsilyl group having 1 to 5 carbon atoms, and an alkoxysilyl group having 1 to 5 carbon atoms, and these groups can also be used in combination. The substitution positions of these substituents are not particularly limited, and the number of substituents is also not limited.

In general formula (2), R³, R⁴, and R⁵ represent a hydrogen atom or a substituted or unsubstituted monovalent hydrocarbon group having 1 to 20 carbon atoms, preferably 1 to 10 carbon atoms, more preferably 1 to 5 carbon atoms.

Examples of the monovalent hydrocarbon group as R³, R⁴, and R⁵ include the same monovalent hydrocarbon groups as those for R¹.

In general formula (2), a represents 0 or 1 and preferably 1.

Specific examples of the monovalent hydrocarbon group containing a carboxy group represented by general formula (2) include a carboxyalkyl group such as a carboxymethyl group, a 1-carboxyethyl group, a 1-carboxy-1-methylethyl group, a 2-carboxyethyl group, a 2-carboxy-1-methylethyl group, a 2-carboxy-2-methylethyl group, a 2-carboxy-1-phenylethyl group, or a 2-carboxy-2-phenylethyl group, and a dicarboxyalkyl group such as a 1,2-dicarboxyethyl group or a 2,3-dicarboxypropyl group.

When the monovalent hydrocarbon group containing a carboxy group represented by general formula (2) is introduced, a dispersion liquid in which the molded product is redispersed can maintain the dispersed state for a long period of time.

Among these, particularly from the viewpoint of the availability of the raw materials, a carboxymethyl group, a 2-carboxyethyl group, a 2-carboxy-1-methylethyl group, a 2-carboxy-2-methylethyl group, or a 2,3-dicarboxypropyl group is preferable.

In general formula (1), R² represents a substituted or unsubstituted monovalent hydrocarbon group having 1 to 20 carbon atoms, preferably 1 to 10 carbon atoms, and more preferably 1 to 5 carbon atoms.

Examples of the monovalent hydrocarbon group as R² include the same monovalent hydrocarbon groups as those for R¹.

Among these, the monovalent hydrocarbon group as R² is preferably a substituted or unsubstituted linear, branched, or cyclic alkyl group having 1 to 5 carbon atoms or an alkenyl group, more preferably an unsubstituted linear or branched alkyl group having 1 to 3 carbon atoms or an alkenyl group particularly from the viewpoint of the availability of the raw materials, and still more preferably a methyl group, an ethyl group, an n-propyl group, or an isopropyl group.

In general formula (1), m represents 0 or a positive number less than 3, preferably 0 or a positive number less than 2, and more preferably 0 or a positive number less than or equal to 1. n represents 0 or 1 and preferably 0. n + m is 0 or a positive number less than 3, preferably 0 or a positive number less than 2, and more preferably 0 or a positive number less than 1.

Specific examples of the compound (1) include a 3-aminopropylsilanetriol polymer, a 3-aminopropylmethylsilanediol polymer, a N-methyl-3-aminopropylsilanetriol polymer, a N-methyl-3-aminopropylmethylsilanediol polymer, a N-(2-aminoethyl)-3-aminopropylsilanetriol polymer, a N-(2-aminoethyl)-3-aminopropylmethylsilanediol polymer, a N-carboxymethyl-3-aminopropylsilanetriol polymer, a N-carboxymethyl-3-aminopropylmethylsilanediol polymer, a N-(1-carboxy)ethyl-3-aminopropylsilanetriol polymer, a N-(1-carboxy)ethyl-3-aminopropylmethylsilanediol polymer, a N-(1-carboxy-1-methyl)ethyl-3-aminopropylsilanetriol polymer, a N-(1-carboxy-1-methyl)ethyl-3-aminopropylmethylsilanediol polymer, a N-(2-carboxy)ethyl-3-aminopropylsilanetriol polymer, a N-(2-carboxy)ethyl-3-aminopropylmethylsilanediol polymer, a N-(2-carboxy-1-methyl)ethyl-3-aminopropylsilanetriol polymer, a N-(2-carboxy-1-methyl)ethyl-3-aminopropylmethylsilanediol polymer, a N-(2-carboxy-2-methyl)ethyl-3-aminopropylsilanetriol polymer, a N-(2-carboxy-2-methyl)ethyl-3-aminopropylmethylsilanediol polymer, a N-(2-carboxy-1-phenyl)ethyl-3-aminopropylsilanetriol polymer, a N-(2-carboxy-1-phenyl)ethyl-3-aminopropylmethylsilanediol polymer, a N-(2-carboxy-2-phenyl)ethyl-3-aminopropylsilanetriol polymer, a N-(2-carboxy-2-phenyl)ethyl-3-aminopropylmethylsilanediol polymer, a N-(1,2-dicarboxy)ethyl-3-aminopropylsilanetriol polymer, a N-(1,2-dicarboxy)ethyl-3-aminopropylmethylsilanediol polymer, a N-(2,3-dicarboxy)propyl-3-aminopropylsilanetriol polymer, and a N-(2,3-dicarboxy)propyl-3-aminopropylmethylsilanediol polymer.

Among these, particularly, an aminopropylsilanetriol polymer containing no carboxy group such as a 3-aminopropylsilanetriol polymer or a N-(2-aminoethyl)-3-aminopropylsilanetriol polymer, an aminopropylsilanetriol polymer containing one carboxy group such as a N-carboxymethyl-3-aminopropylsilanetriol polymer, a N-(2-carboxy)ethyl-3-aminopropylsilanetriol polymer, a N-(2-carboxy)ethyl-3-aminopropylmethylsilanediol polymer, a N-(2-carboxy-1-methyl)ethyl-3-aminopropylsilanetriol polymer, or a N-(2-carboxy-2-methyl)ethyl-3-aminopropylsilanetriol polymer, and an aminopropylsilanetriol polymer containing two carboxy groups such as a N-(1,2-dicarboxy)ethyl-3-aminopropylsilanetriol polymer or a N-(2,3-dicarboxy)propyl-3-aminopropylsilanetriol polymer are preferable, and a N-(2-carboxy)ethyl-3-aminopropylsilanetriol polymer, a N-(2-carboxy-1-methyl)ethyl-3-aminopropylsilanetriol polymer, and a N-(2-carboxy-2-methyl)ethyl-3-aminopropylsilanetriol polymer are more preferable.

The compound (1) contained in the molded product of the present invention can be dissolved again in a solvent such as water after being molded, and thus the molded product can be redispersed even without containing the organic titanate and the organic zirconate described in Patent Document 1.

The compound (1) can be obtained by mixing a silane compound containing an amino acid ester-containing group represented by general formula (3) (hereinafter, referred to as "compound (3)") with water to carry out a hydrolysis reaction and drying the mixture under normal pressure or reduced pressure as necessary.

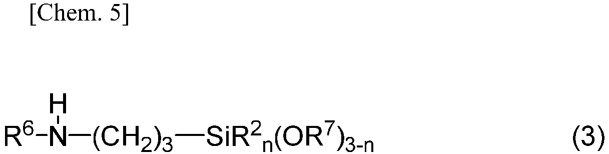

### (In the formula, R² and n each have the same definition as described above.)

In general formula (3), R⁶ represents a hydrogen atom, a substituted or unsubstituted monovalent hydrocarbon group having 1 to 20 carbon atoms, preferably 1 to 10 carbon atoms, and more preferably 1 to 5 carbon atoms, or a monovalent hydrocarbon group containing an alkoxycarbonyl group represented by general formula (4).

Examples of the monovalent hydrocarbon group as R⁶ include the same monovalent hydrocarbon groups as those for R¹. 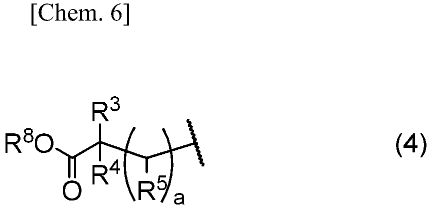 (In the formula, R³ to R⁵ and a each have the same definition as described above.)

In general formula (4), R⁸ represents a substituted or unsubstituted monovalent hydrocarbon group having 1 to 20 carbon atoms, preferably 1 to 10 carbon atoms, and more preferably 1 to 5 carbon atoms or a triorganosilyl group represented by general formula (5).

-SiR⁹R¹⁰R¹¹ (5)

In general formula (4), examples of the monovalent hydrocarbon group as R⁸ include the same monovalent hydrocarbon groups as those for R¹.

In general formula (5), R⁹, R¹⁰, and R¹¹ each independently represent a substituted or unsubstituted monovalent hydrocarbon group having 1 to 20 carbon atoms, preferably 1 to 10 carbon atoms, and more preferably 1 to 5 carbon atoms. Examples of the monovalent hydrocarbon group as R⁹, R¹⁰, and R¹¹ include the same monovalent hydrocarbon groups as those for R¹.

Among these, R⁹, R¹⁰, and R¹¹ represent preferably an unsubstituted linear, branched, or cyclic alkyl group having 1 to 6 carbon atoms, an alkenyl group, or an aryl group, more preferably an unsubstituted linear or branched alkyl group having 1 to 4 carbon atoms or an alkenyl group particularly from the viewpoint of the availability of the raw materials, and still more preferably a methyl group, an ethyl group, an isopropyl group, or a tert-butyl group.

Specific examples of the triorganosilyl group represented by general formula (5) include a trimethylsilyl group, an ethyldimethylsilyl group, a diethylmethylsilyl group, a triethylsilyl group, a tert-butyldimethylsilyl group, a triisopropylsilyl group, a hexyldimethylsilyl group, an octyldimethylsilyl group, a decyldimethylsilyl group, an octadecyldimethylsilyl group, a phenyldimethylsilyl group, a diphenylmethylsilyl group, a triphenylsilyl group, and a tert-butyldiphenylsilyl group.

Among these, from the viewpoint of the availability of the raw materials, a trimethylsilyl group, a triethylsilyl group, a tert-butyldimethylsilyl group, a triisopropylsilyl group, or a tert-butyldiphenylsilyl group is more preferable, and a trimethylsilyl group or a triisopropylsilyl group is still more preferable.

Specific examples of the compound (3) include 3-aminopropyltrimethoxysilane, 3-aminopropyldimethoxymethylsilane, 3-aminopropyldiethoxymethylsilane, N-methyl-3-aminopropyltrimethoxysilane, N-methyl-3-aminopropyltriethoxysilane, N-methyl-3-aminopropyldimethoxymethylsilane, N-methyl-3-aminopropyldiethoxymethylsilane, N-(2-aminoethyl)-3-aminopropyltrimethoxysilane, N-(2-aminoethyl)-3-aminopropyltriethoxysilane, N-(2-aminoethyl)-3-aminopropyldimethoxymethylsilane, N-(2-aminoethyl)-3-aminopropyldiethoxymethylsilane, N-(methoxycarbonyl)methyl-3-aminopropyltrimethoxysilane, N-(methoxycarbonyl)methyl-3-aminopropylmethyldimethoxysilane, N-(methoxycarbonyl)methyl-3-aminopropyltriethoxysilane, N-(methoxycarbonyl)methyl-3-aminopropylmethyldiethoxysilane, N-(ethoxycarbonyl)methyl-3-aminopropyltrimethoxysilane, N-(ethoxycarbonyl)methyl-3-aminopropylmethyldimethoxysilane, N-(ethoxycarbonyl)methyl-3-aminopropyltriethoxysilane, N-(ethoxycarbonyl)methyl-3-aminopropylmethyldiethoxysilane, N-(trimethylsiloxycarbonyl)methyl-3-aminopropyltrimethoxysilane, N-(trimethylsiloxycarbonyl)methyl-3-aminopropylmethyldimethoxysilane, N-(trimethylsiloxycarbonyl)methyl-3-aminopropyltriethoxysilane, N-(trimethylsiloxycarbonyl)methyl-3-aminopropylmethyldiethoxysilane, N-(triethylsiloxycarbonyl)methyl-3-aminopropyltrimethoxysilane, N-(triethylsiloxycarbonyl)methyl-3-aminopropylmethyldimethoxysilane, N-(triisopropylsiloxycarbonyl)methyl-3-aminopropyltrimethoxysilane, N-(triisopropylsiloxycarbonyl)methyl-3-aminopropylmethyldimethoxysilane, N-(1-methoxycarbonyl)ethyl-3-aminopropyltrimethoxysilane, N-(1-methoxycarbonyl)ethyl-3-aminopropylmethyldimethoxysilane, N-(1-methoxycarbonyl-1-methyl)ethyl-3-aminopropyltrimethoxysilane, N-(1-methoxycarbonyl-1-methyl)ethyl-3-aminopropylmethyldimethoxysilane, N-(2-methoxycarbonyl)ethyl-3-aminopropyltrimethoxysilane, N-(2-methoxycarbonyl)ethyl-3-aminopropylmethyldimethoxysilane, N-(2-methoxycarbonyl)ethyl-3-aminopropyltriethoxysilane, N-(2-methoxycarbonyl)ethyl-3-aminopropylmethyldiethoxysilane, N-(2-ethoxycarbonyl)ethyl-3-aminopropyltrimethoxysilane, N-(2-ethoxycarbonyl)ethyl-3-aminopropylmethyldimethoxysilane, N-(2-ethoxycarbonyl)ethyl-3-aminopropyltriethoxysilane, N-(2-ethoxycarbonyl)ethyl-3-aminopropylmethyldiethoxysilane, N-(2-trimethylsiloxycarbonyl)ethyl-3-aminopropyltrimethoxysilane, N-(2-trimethylsiloxycarbonyl)ethyl-3-aminopropylmethyldimethoxysilane, N-(2-trimethylsiloxycarbonyl)ethyl-3-aminopropyltriethoxysilane, N-(2-trimethylsiloxycarbonyl)ethyl-3-aminopropylmethyldiethoxysilane, N-(2-triethylsiloxycarbonyl)ethyl-3-aminopropyltrimethoxysilane, N-(2-triethylsiloxycarbonyl)ethyl-3-aminopropylmethyldimethoxysilane, N-(2-triisopropylsiloxycarbonyl)ethyl-3-aminopropyltrimethoxysilane, N-(2-triisopropylsiloxycarbonyl)ethyl-3-aminopropylmethyldimethoxysilane, N-(2-methoxycarbonyl-2-methyl)ethyl-3-aminopropyltrimethoxysilane, N-(2-methoxycarbonyl-2-methyl)ethyl-3-aminopropylmethyldimethoxysilane, N-(2-methoxycarbonyl-2-phenyl)ethyl-3-aminopropyltrimethoxysilane, N-(2-methoxycarbonyl-2-phenyl)ethyl-3-aminopropylmethyldimethoxysilane, N-(1-methyl-2-methoxycarbonyl)ethyl-3-aminopropyltrimethoxysilane, N-(1-methyl-2-methoxycarbonyl)ethyl-3-aminopropylmethyldimethoxysilane, N-(1-phenyl-2-methoxycarbonyl)ethyl-3-aminopropyltrimethoxysilane, N-(1-phenyl-2-methoxycarbonyl)ethyl-3-aminopropylmethyldimethoxysilane, N-[1,2-bis(methoxycarbonyl)]ethyl-3-aminopropyltrimethoxysilane, N-[1,2-bis(methoxycarbonyl)]ethyl-3-aminopropylmethyldimethoxysilane, N-[2,3-bis(methoxycarbonyl)]propyl-3-aminopropyltrimethoxysilane, and N-[2,3-bis(methoxycarbonyl)]propyl-3-aminopropylmethyldimethoxysilane.

Among these, particularly, 3-aminopropyltrimethoxysilane, N-(2-aminoethyl)-3-aminopropyltrimethoxysilane, N-(2-aminoethyl)-3-aminopropyltriethoxysilane, N-(methoxycarbonyl)methyl-3-aminopropyltrimethoxysilane, N-(methoxycarbonyl)methyl-3-aminopropylmethyldimethoxysilane, N-(2-methoxycarbonyl)ethyl-3-aminopropyltrimethoxysilane, N-(2-methoxycarbonyl)ethyl-3-aminopropylmethyldimethoxysilane, N-(2-ethoxycarbonyl)ethyl-3-aminopropyltriethoxysilane, N-(2-trimethylsiloxycarbonyl)ethyl-3-aminopropyltrimethoxysilane, N-(2-triisopropylsiloxycarbonyl)ethyl-3-aminopropyltrimethoxysilane, N-(2-methoxycarbonyl-2-methyl)ethyl-3-aminopropyltrimethoxysilane, N-(1-methyl-2-methoxycarbonyl)ethyl-3-aminopropyltrimethoxysilane, N-(1-phenyl-2-methoxycarbonyl)ethyl-3-aminopropyltrimethoxysilane, N-[1,2-bis(methoxycarbonyl)]ethyl-3-aminopropyltrimethoxysilane, and N-[2,3-bis(methoxycarbonyl)[propyl-3-aminopropyltrimethoxysilane are preferable.

Examples of a method for mixing the compound (3) with water include a method for adding the compound (3) to water and a method for adding water to the compound (3).

The amount of water used for mixing is preferably 1.5 to 10000 moles, more preferably 1.5 to 1000 moles, and still more preferably 1.5 to 100 moles per mole of the compound (3).

When the amount of water to be used is small, hydrolysis does not sufficiently occur, and thus the product is not formed in a solid state. On the contrary, when the amount of water to be used is large, the energy required for drying is increased, and thus the efficiency is decreased.

The temperature and the pressure during the mixing are not particularly limited, but the temperature is preferably 0°C to 120°C and more preferably 10°C to 60°C under normal pressure, and the reaction time is also not particularly limited, but is preferably 1 to 40 hours and more preferably 1 to 20 hours.

Further, although the catalyst is not particularly required, an acid such as hydrochloric acid, sulfuric acid, or acetic acid, and a base such as sodium hydroxide, potassium hydroxide, or sodium carbonate may be added.

A solvent other than water can also be used for the mixing as necessary. Examples of the solvent to be used include a hydrocarbon-based solvent such as pentane, hexane, cyclohexane, heptane, octane, isooctane, benzene, toluene, xylene, mesitylene, or tetralin, an alcohol-based solvent such as methanol, ethanol, isopropanol, or tert-butanol, an ether-based solvent such as diethyl ether, tetrahydrofuran, or dioxane, an ester-based solvent such as ethyl acetate or butyl acetate, an aprotic polar solvent such as acetonitrile, and a chlorinated hydrocarbon solvent such as dichloromethane or chloroform. These solvents may be used alone or in the form of a mixture of two or more kinds thereof.

Examples of inorganic particles used in the present invention include metals such as aluminum, manganese, nickel, titanium, and zinc, alloy particles thereof, and inorganic oxide particles such as titanium oxide, silicon oxide, zinc oxide, zirconium oxide, aluminum oxide, iron oxide, manganese oxide, nickel oxide, and zeolite. Further, these inorganic particles may be used alone or in the form of a mixture of two or more kinds thereof.

Among these, particularly, inorganic oxide particles and mixtures thereof are preferable, single inorganic oxide particles are more preferable, and aluminum oxide, titanium oxide, silicon oxide, and zirconium oxide are still more preferable.

From the viewpoints of moldability and economy, the amount of the compound (1) to be blended is preferably 0.1 to 1,000 parts by weight, more preferably 1 to 500 parts by weight, still more preferably 5 to 300 parts by weight, and even still more preferably 10 to 100 parts by weight with respect to 100 parts by weight of the inorganic particles.

Next, a method for producing the molded product will be described.

The molded product of the present invention is obtained by mixing a solution containing the compound (1) with the inorganic particles and molding the obtained composition.

As the solution containing the compound (1), a solution of the compound (1) to be obtained by the reaction may be used as is, a solution to which another solvent is further added may be used, or a solution obtained by temporarily drying a solution of the compound (1) and dissolving the resultant again in water or another solvent may be used.

A method for mixing the solution containing the compound (1) with the inorganic particles is not particularly limited, and a known device such as a mixer, a disperser, or a stirrer can be used. Examples of such a device include a mixing/dispersing mill, a Homogenizing Disper, a mortar mixer, a roll, a paint shaker, a homogenizer, and a planetary centrifugal mixer. Among these, particularly from the viewpoint of uniformity after the mixing, a Homogenizing Disper, a homogenizer, or a planetary centrifugal mixer is preferable, and a Homogenizing Disper or a planetary centrifugal mixer is more preferable.

A method for molding the mixture of the solution containing the compound (1) in the form of a liquid, clay, or cream with the inorganic particles, which is obtained by the mixing, is not particularly limited, and the mixture may be molded by injection molding, extrusion molding, compression molding, press molding, hand lay-up molding, or molding by being placed in a predetermined mold. Among these, particularly, injection molding, extrusion molding, or compression molding is preferable, and compression molding is more preferable.

The obtained molded product may be used as is, but may be dried as necessary to remove the solvent by distillation.

A method for drying the molded product is not particularly limited, and examples thereof include freeze drying, zeodration, fluidized bed drying, tray drying, vacuum evaporation, and spray drying, and these methods may be used alone or in combination of two or more kinds thereof. Among these, particularly from the viewpoint of maintaining the moldability, freeze drying, fluidized bed drying, tray drying, or vacuum evaporation is preferable. Further, the pressure and the temperature during the drying are not particularly limited, but the temperature is preferably -100°C to 200°C, more preferably 0°C to 200°C, and still more preferably 50°C to 200°C under normal pressure or reduced pressure.

In addition, the molded product may be dried before molding unless the molding is interfered with.

The shape of the molded product of the present invention is not particularly limited, and examples thereof include a granular shape, a tablet shape, a capsule shape, a spherical shape, an elliptical shape, a plate shape, a cylindrical shape, a prism shape, a polyhedral shape, a tubular shape, and a cubic shape.

Next, the inorganic particle dispersion liquid will be described.

The inorganic particle dispersion liquid of the present invention is obtained by redispersing the molded product molded as described above in a dispersion medium.

Since the surface of the inorganic particles in the molded product is subjected to a surface treatment with the compound (1), the molded product disintegrates easily in the dispersion medium, the inorganic particles in the dispersion liquid that has been further obtained are not sedimented, and thus can maintain the dispersed state for a long period of time.

Water or the solvent other than water, which is used for mixing the solution containing the compound (1) with the inorganic particles can be used as the dispersion medium, but a dispersion medium containing water is preferable.

The concentration of the dispersion liquid is not particularly limited, but is preferably 0.01% to 70% by weight, more preferably 0.1% to 50% by weight, and still more preferably 0.5% to 30% by weight.

### EXAMPLES

Hereinafter, the present invention will be described in detail with reference to Synthesis Examples, Examples, and Comparative Examples, but the present invention is not limited to the following Examples.

### [1] Preparation of solution containing water-soluble polysiloxane compound containing amino group

### [Synthesis Example 1] Synthesis of aqueous solution containing N-(2-carboxy)ethyl-3-aminopropylsilanetriol and condensate thereof

A flask provided with a stirrer, a reflux condenser, a dropping funnel, and a thermometer was charged with 79.7 g of water, and 53.1 g (0.2 moles) of N-(2-methoxycarbonyl)ethyl-3-aminopropyltrimethoxysilane was added thereto. The obtained reaction solution was distilled under normal pressure so that methanol generated by hydrolysis and water were removed by distillation. Water was added to the obtained aqueous solution to adjust the concentration thereof to 50% by weight, thereby obtaining 76.8 g of an aqueous solution containing N-(2-carboxy)ethyl-3-aminopropylsilanetriol and a condensate thereof.

### [Synthesis Example 2] Synthesis of aqueous solution containing N-(2-carboxy-1-methyl)ethyl-3-aminopropylsilanetriol and condensate thereof

A flask provided with a stirrer, a reflux condenser, a dropping funnel, and a thermometer was charged with 40.0 g of water, and 20.0 g (0.072 moles) of N-(2-methoxycarbonyl-1-methyl)ethyl-3-aminopropyltrimethoxysilane was added thereto. The obtained reaction solution was distilled under normal pressure so that methanol generated by hydrolysis and water were removed by distillation. Water was added to the obtained aqueous solution to adjust the concentration thereof to 50% by weight, thereby obtaining 26.6 g of an aqueous solution containing N-(2-carboxy-1-methyl)ethyl-3-aminopropylsilanetriol and a condensate thereof.

### [Synthesis Example 3] Synthesis of aqueous solution containing N-(2-carboxy-2-methyl)ethyl-3-aminopropylsilanetriol and condensate thereof

A flask provided with a stirrer, a reflux condenser, a dropping funnel, and a thermometer was charged with 40.0 g of water, and 20.0 g (0.072 moles) of N-(2-methoxycarbonyl-2-methyl)ethyl-3-aminopropyltrimethoxysilane was added thereto. The obtained reaction solution was distilled under normal pressure so that methanol generated by hydrolysis and water were removed by distillation. Water was added to the obtained aqueous solution to adjust the concentration thereof to 50% by weight, thereby obtaining 30.6 g of an aqueous solution containing N-(2-carboxy-1-methyl)ethyl-3-aminopropylsilanetriol and a condensate thereof.

### [Synthesis Example 4] Synthesis of aqueous solution containing N-carboxymethyl-3-aminopropylsilanetriol and condensate thereof

A flask provided with a stirrer, a reflux condenser, a dropping funnel, and a thermometer was charged with 35.1 g of water and 0.2 g of acetic acid, and 20.0 g (0.065 moles) of N-methoxycarbonylmethyl-3-aminopropyltrimethoxysilane was added thereto. The obtained reaction solution was distilled under normal pressure so that methanol generated by hydrolysis and water were removed by distillation. Water was added to the obtained aqueous solution to adjust the concentration thereof to 50% by weight, thereby obtaining 24.3 g of an aqueous solution containing N-carboxymethyl-3-aminopropylsilanetriol and a condensate thereof.

### [2] Production of molded product containing inorganic particles and water-soluble polysiloxane compound containing amino group

### [Example 1-1]

2.0 g of the aqueous solution obtained in Synthesis Example 1, 5.0 g of titanium oxide (anatase type, manufactured by FUJIFILM Wako Pure Chemical Corporation), and 1.0 g of water were added to a sample tube, and the mixture was kneaded using a planetary centrifugal mixer (ARE-310, manufactured by THINKY CORPORATION) at a orbital speed of 2000 rpm and a rotation speed of 800 rpm for 3 minutes. The kneaded composition was transferred into a mold, and dried at 110°C for 1 hour, thereby obtaining a molded product.

### [Example 1-2]

A molded product was obtained in the same manner as in Example 1-1 except that 2.0 g of the aqueous solution obtained in Synthesis Example 2 was used in place of the aqueous solution obtained in Synthesis Example 1.

### [Example 1-3]

A molded product was obtained in the same manner as in Example 1-1 except that 2.0 g of the aqueous solution obtained in Synthesis Example 3 was used in place of the aqueous solution obtained in Synthesis Example 1.

### [Example 1-4]

A molded product was obtained in the same manner as in Example 1-1 except that 2.0 g of the aqueous solution obtained in Synthesis Example 4 was used in place of the aqueous solution obtained in Synthesis Example 1.

### [Example 1-5]

A molded product was obtained in the same manner as in Example 1-1 except that 3.0 g of an aqueous solution (concentration: 30% by weight) containing 3-aminopropylsilanetriol and a condensate thereof was used in place of the aqueous solution obtained in Synthesis Example 1 and water added in Example 1-1.

### [Example 1-6]

A molded product was obtained in the same manner as in Example 1-1 except that 3.0 g of an aqueous solution (concentration: 30% by weight) containing 3-(2-aminoethyl)aminopropylsilanetriol and a condensate thereof was used in place of the aqueous solution obtained in Synthesis Example 1 and water added in Example 1-1.

### [Example 1-7]

A molded product was obtained in the same manner as in Example 1-1 except that 2.0 g of silicon oxide (BET specific surface area: 49 m²/g) was used in place of titanium oxide of Example 1-1.

### [Example 1-8]

A molded product was obtained in the same manner as in Example 1-1 except that 2.0 g of silicon oxide (BET specific surface area: 49 m²/g) was used in place of titanium oxide of Example 1-1 and 2.0 g of the aqueous solution obtained in Synthesis Example 3 was used in place of the aqueous solution obtained in Synthesis Example 1.

### [Comparative Example 1-1]

A molded product was obtained in the same manner as in Example 1-1 except that 2.0 g of water was used in place of the aqueous solution obtained in Synthesis Example 1. The molded product was brittle, and disintegrated easily when taken out of the mold.

### [Comparative Example 1-2]

A molded product was obtained in the same manner as in Example 1-1 except that 3.0 g of an aqueous solution (concentration: 30% by weight) prepared by hydrolyzing γ-glycidoxypropyltriethoxysilane used in Patent Document 1 was used in place of the aqueous solution obtained in Synthesis Example 1 and water added in Example 1-1.

### [Comparative Example 1-3]

A molded product was obtained in the same manner as in Example 1-1 except that 2.0 g of silicon oxide (BET specific surface area: 49 m²/g) was used in place of titanium oxide of Example 1-1 and 2.0 g of water was used in place of the aqueous solution obtained in Synthesis Example 1.

### [3] Production of inorganic particle dispersion liquid

### [Example 2-1]

When water was added to the molded product obtained in Example 1-1 to reach a concentration of 10% by weight, the molded product disintegrated easily, and a uniform dispersion liquid was obtained by shaking. The titanium oxide particles exhibited satisfactory dispersibility, and the dispersed state was maintained for 12 hours or longer after the shaking.

### [Example 2-2]

When water was added to the molded product obtained in Example 1-2 to reach a concentration of 10% by weight, the molded product disintegrated easily, and a uniform dispersion liquid was obtained by shaking. The titanium oxide particles exhibited satisfactory dispersibility, and the dispersed state was maintained for 12 hours or longer after the shaking.

### [Example 2-3]

When water was added to the molded product obtained in Example 1-3 to reach a concentration of 10% by weight, the molded product disintegrated easily, and a uniform dispersion liquid was obtained by shaking. The titanium oxide particles exhibited satisfactory dispersibility, and the dispersed state was maintained for 12 hours or longer after the shaking.

### [Example 2-4]

When water was added to the molded product obtained in Example 1-4 to reach a concentration of 10% by weight, the molded product disintegrated easily, and a uniform dispersion liquid was obtained by shaking. The titanium oxide particles exhibited satisfactory dispersibility, and the dispersed state was maintained for 12 hours or longer after the shaking.

### [Example 2-5]

When water was added to the molded product obtained in Example 1-5 to reach a concentration of 10% by weight, the molded product disintegrated easily, and a uniform dispersion liquid was obtained by shaking. The titanium oxide particles exhibited a moderate level of dispersibility, and the dispersed state was maintained for up to 5 hours after the shaking.

### [Example 2-6]

When water was added to the molded product obtained in Example 1-6 to reach a concentration of 10% by weight, the molded product disintegrated easily, and a uniform dispersion liquid was obtained by shaking. The titanium oxide particles exhibited a moderate level of dispersibility, and the dispersed state was maintained for up to 5 hours after the shaking.

### [Example 2-7]

When water was added to the molded product obtained in Example 1-7 to reach a concentration of 1% by weight, the molded product disintegrated easily, and a uniform dispersion liquid was obtained by shaking. The silicon oxide particles exhibited satisfactory dispersibility, and the dispersed state was maintained for 24 hours or longer after the shaking.

### [Example 2-8]

When water was added to the molded product obtained in Example 1-8 to reach a concentration of 1% by weight, the molded product disintegrated easily, and a uniform dispersion liquid was obtained by shaking. The silicon oxide particles exhibited satisfactory dispersibility, and the dispersed state was maintained for 24 hours or longer after the shaking.

### [Comparative Example 2-1]

When water was added to the molded product obtained in Comparative Example 1-1 to reach a concentration of 10% by weight, the molded product disintegrated easily, and a uniform dispersion liquid was obtained by shaking, but the titanium oxide particles were sedimented one hour after the shaking.

### [Comparative Example 2-2]

When water was added to the molded product obtained in Comparative Example 1-2 to reach a concentration of 10% by weight, the molded product did not disintegrate, and remained at the bottom of the container even when shaken.

### [Comparative Example 2-3]

When water was added to the molded product obtained in Comparative Example 1-3 to reach a concentration of 1% by weight, the molded product did not disintegrate, and remained at the bottom of the container even when shaken.

## Claims

1. A molded product comprising:
a water-soluble polysiloxane compound containing an amino group represented by general formula (1); and
inorganic particles,
wherein the molded product does not contain an organic titanate or an organic zirconate, 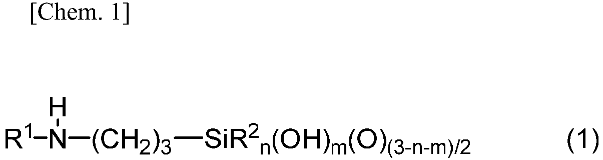
in formula (1), R¹ represents a hydrogen atom, a substituted or unsubstituted monovalent hydrocarbon group having 1 to 20 carbon atoms, or a monovalent hydrocarbon group containing a carboxy group represented by general formula (2), 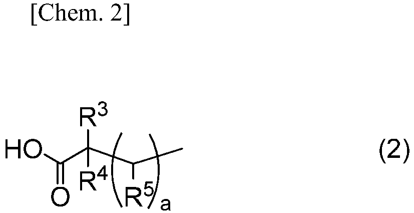
in formula (2), R³, R⁴, and R⁵ each independently represent a hydrogen atom or a substituted or unsubstituted monovalent hydrocarbon group having 1 to 20 carbon atoms, and a represents 0 or 1,
R² represents a substituted or unsubstituted monovalent hydrocarbon group having 1 to 20 carbon atoms,
m represents 0 or a positive number less than 3, n represents 0 or 1, and n + m is 0 or a positive number less than 3.

2. The molded product according to claim 1,
wherein the inorganic particles are inorganic oxide particles.

3. The molded product according to claim 2,
wherein the inorganic oxide particles are selected from the group consisting of titanium oxide, silicon oxide, zinc oxide, zirconium oxide, aluminum oxide, and zeolite.

4. The molded product according to claim 1 or 2,
wherein an amount of the water-soluble polysiloxane compound containing an amino group to be blended is 0.1 to 1000 parts by weight with respect to 100 parts by weight of the inorganic particles.

5. An inorganic particle dispersion liquid comprising:
a mixture of the molded product according to claim 1 and a dispersion medium,
wherein the inorganic particles are dispersed in the dispersion medium.

6. A method for producing an inorganic particle dispersion liquid, comprising:
mixing the molded product according to claim 1 with a dispersion medium.

7. A method for producing the molded product according to claim 1, comprising:
mixing a solution that contains the water-soluble polysiloxane compound containing an amino group with the inorganic particles; and
molding the obtained mixture.
